# EUROPEAN PATENT SPECIFICATION

(11) **EP 1 472 898 B1**
(45) Date of publication and mention of the grant of the patent: **18.07.2012**
(21) Application number: 03706432.6
(22) Date of filing: 05.02.2003
(51) Int. Cl.: H04W 4/22

(54) **METHOD FOR INITIATING AN EMERGENCY CALL AND APPARATUS FOR INITIATING AN EMERGENCY CALL**
VERFAHREN ZUM EINLEITEN EINES NOTRUFS UND VORRICHTUNG UM EINEN NOTRUF AUSZULÖSEN
PROCEDE PERMETTANT DE DECLENCHER UN APPEL D'URGENCE ET APPAREIL POUR DECLENCHER UN APPEL D'URGENCE

(30) Priority: 05.02.2002 DE 10204480
(43) Date of publication of application: 03.11.2004
(73) Proprietor: Harman Becker Automotive Systems GmbH, 76307 Karlsbad (DE)
(72) Inventor: WOLF, Stefan, 71701 Schwieberdingen (DE)
(74) Representative: Bertsch, Florian Oliver
(86) International application number: PCT/EP2003/001133
(87) International publication number: WO 2003/067913

(56) References cited:
- WO-A-01/41458
- WO-A-97/23104
- US-A- 6 073 004

## Description

### Field of the invention

The invention relates to a method for initiating an emergency call from a vehicle having a mobile communication means, and, furthermore, to an emergency call apparatus for initiating an emergency call from a vehicle comprising a mobile communication means.

### Background of the invention

In order to use a cellular phone in a vehicle, e.g. a mobile phone, for common calls as well as for initiating an emergency call, two SIM-cards are employed in the vehicle; a first SIM-card for conventional calls and a second SIM-card - an emergency SIM-card -for initiating an emergency call. In case of an emergency call, e.g. by pressing an emergency button by the driver after an accident, the emergency SIM-card transmits an identification key to a network operator. The network operator is provided with a corresponding identification key for identifying the calling person. After it is verified that the received identification key matches with that of the network operator, the measures standard for a reception of an emergency call are initiated by the network operator, see for instance WO-A-97/23104.

However, according to the practice of the prior art, when an emergency call is initiated, the cellular phone is switched from the first SIM-card to the emergency SIM-card, which may take between 30 and 90 seconds, because the cellular phone has to unregister from the GSM-network and, subsequently, to reregister using the emergency SIM-card. Thereby, precious time is lost.

The switching from the first SIM-card to the emergency SIM-card is necessary, e.g. for rental cars, so that the user is identifiable by the network operator by means of his telephone number stored on the emergency SIM-card. Instead of the telephone number stored on the emergency SIM-card, e.g. the serial number of the cellular phone could be transmitted to the network operator, however, this is not permitted by the network operator for security reasons.

### Summary of the invention

It is an object of the invention to overcome the disadvantages associated with prior art methods for initiating emergency calls and with prior art emergency call apparatus.

Furthermore, it is an object of the invention to provide a method for initiating an emergency call and an apparatus for an emergency call such that an emergency call is initiated as fast as possible after an emergency button has been operated.

These objects are accomplished by a method for initiating an emergency call from a vehicle having the features of claim 1 and an apparatus for initiating an emergency call from a vehicle having the features of claim 10.

The present invention provides a method for initiating an emergency call from a vehicle having a mobile communication means being operable to communicate with a communication network via a wireless communication link, wherein the communication means is connected to a removable data carrier carrying information relating to regular use of said communication network and to an emergency data storage means storing information relating to emergency use of said communication network, comprising the steps of retrieving an identification key from the emergency data storage means and transmitting the identification key to a recipient within the communication network using a communication link established using information retrieved from the data carrier.

Furthermore, the present invention further provides an emergency call apparatus for initiating an emergency call from a vehicle comprising a mobile communication means being operable to communicate with a communication network via a wireless communication link, a removable data carrier for carrying information relating to regular use of said communication network, an emergency data storage means for storing information relating to emergency use of said communication network, wherein the removable data carrier and the emergency data storage means are connected to said mobile communication means, retrieving means for retrieving an identification key from said emergency data storage means in case of an emergency, and transmitting means for transmitting said identification key to a recipient within said communication network using a communication link established using information retrieved from said data carrier.

### Detailed description of the invention

This invention relates to method for initiating an emergency call from vehicle having a mobile communication means.

The term "mobile communication means" as used herein refers to devices that are capable of communicating with a stationary communication network while the device is in motion such as cellular phones, satellite communication means, walkie-talkies, and the like. The communication between the mobile communication means may be unidirectional (from the communication means to said communications network) or bi-directional.

The term "communication network" refers to a receiver or to a network of receivers that are capable of receiving information from one or more mobile communication means. For example, such communication networks include cellular phone networks such as GSM, UMTS, and the like as well as satellite communication networks and the like. In case of unidirectional communication from the mobile communication means to the communication network, the communication network comprises at least one information recipient. In case of bi-directional communication, the communication network further comprises at least one information provider which may be unitary with the information recipient.

The communication link between the mobile communication means and the communication networks may be wireless such as a radio connection.

The mobile communication means comprises a data carrier carrying information relating to regular use of the mobile communication means with said communication network. Typically, this information comprises information identifying the user of the mobile communication means. The data carrier may be removable so that a plurality of users can use the mobile communication device by inserting their respective personal data carrier. A number of suitable data carriers are well known in the art including but not being limited to diskettes, memory cards, CD-ROMS, DVD-ROMs, chip cards, and the like. For cellular phones, the data carrier may be a SIM-card.

The mobile communication means further comprises an emergency data storage means for storing information related to emergency calls. The information on the emergency data storage means is independent of the information contained on said data carrier. It is therefore possible to establish an emergency call using information stored on said emergency data storage means independent of the information stored on said data carrier, i.e. independent of who is presently using the mobile communication device. The emergency data storage means may or may not be removable from said mobile communication means. A number of non-volatile memory means are known in the art including but not being limited to ROMs, Flash-ROMS, chip cards, and the like.

The mobile communication means is capable of using the established communication link for initiating an emergency call. This communication link may have been established for regular use of said mobile communication means using information retrieved from said data carrier prior to the occurrence of the emergency case. The emergency call then includes transmission of information retrieved from said emergency data storage means to a recipient within said communication network.

The information stored on said emergency data storage means may include an identification key such as a numerical or alpha-numerical value. Alternatively, an algorithm may be stored on said emergency data storage means and an identification key is calculated by that algorithm on the basis of a check number transmitted to the mobile communication means who is initiating the emergency call from a provider in the communications network. For this method, the provider is provided with the same algorithm, thus being able to check whether the identification key calculated and returned by the mobile communication means is correct. Thereby, security of data transmission is significantly improved.

This invention provides a method for initiating an emergency call comprising a step of transmitting an identification key to a recipient within said communication network. Preferably, the steps of retrieving and transmitting the identification key stored on said emergency data storage means are performed while the mobile communication means is connected with the communication network via a previously established communication link.

It is an advantage of this measure that for initiating an emergency call the mobile communication means does not need to discontinue the previously established communication link and, subsequently, to establish a new communication link for transmitting the emergency call. Instead, the mobile communication means can instantaneously retrieve the identification from the emergency data storage means and transmit that identification key using the previously established communication link.

In the transmission of the emergency call, additional information may be transmitted. Such information may be obtained from the user (for example voice recording or data input) or may be obtained from other devices connected to the mobile communication means. For example, if a position determination means such as a GPS sensor is connected to the mobile communication means, the current position may be transmitted as part of the emergency call. If a vehicle accident has been detected for example by the sensors associated with the air bags, this information may be transmitted as well.

Upon receiving an emergency call identification key from the mobile communication means, the recipient within the communication network may optionally verify the received identification key by matching the key with the keys contained in a database. The network operator may then initiate standard measures for responding to an emergency. If the data base contains additional information, the recipient may further forward the emergency call to further recipients (such as a car rental company owning the vehicle) or may retrieve additional information from the data base (for example specific information relating to the user such as specific health problems).

As a result of the method of the present invention, in case of an emergency a valuable amount of time can be gained (by using a previously established communication link) and additional actions can be triggered by receiving an identification key from the mobile communication means.

For the installation of the emergency call apparatus in a vehicle, the reading device for the data carrier and/or the reading device for the emergency data storage means may or may not be co-located with said mobile communication means. The information retrieved from the data carrier or from the emergency data storage means may be transmitted to the mobile communication means using a local communication network in the vehicle. Suitable local information networks are known in the art and include without limitation electrical data networks, optical data networks (such as MOST), wireless networks (such as WLAN or Bluetooth) and the like.

The emergency call apparatus may be connected to or integrated with a multimedia device in the vehicle. Such multimedia devices for vehicles include without limitation radio receivers, audio and video entertainment systems, navigation systems, function control systems, and the like. Such multimedia devices may also comprise a plurality of components which are connected with each other via network such as an optical annular network (MOST). In particular, the mobile communication means of the present invention may be functionally integrated with the multimedia device.

### Brief description of the figures

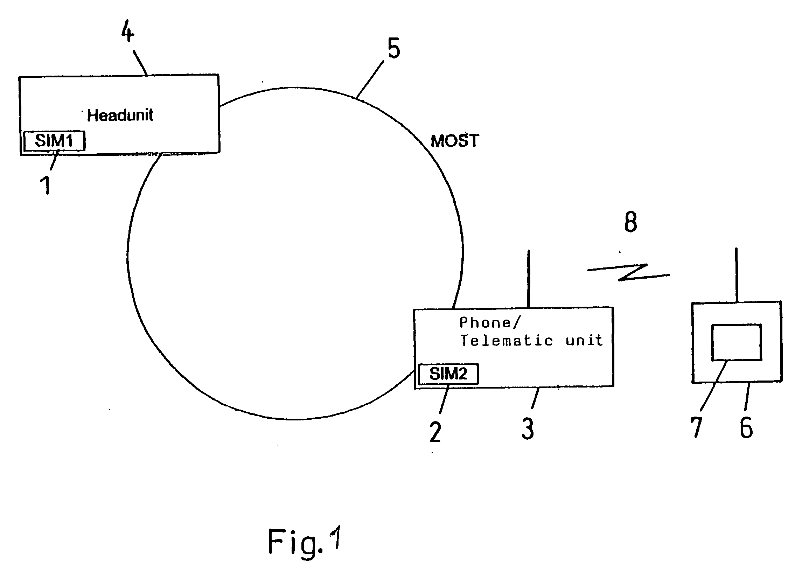

Fig. 1 shows an exemplary embodiment of the emergency call apparatus of the present invention.

An embodiment of an emergency call apparatus according to the invention is shown in the figure, wherein the mobile communication means 3 is a cellular phone, the emergency data storage means 2 is an emergency SIM-card, and a data carrier 1 is a first SIM-card for regular use. The emergency data storage means 2 is located in the cellular phone, while the first SIM-card is located in a so-called head unit 4. All of these components are networked via an annular MOST data bus 5. When an emergency call is initiated, the cellular phone inquires the identification key from the emergency SIM-card and transmits the same via a radio link 8 to a network recipient 6, where the received identification key is compared to the identification keys stored in the memory 7. If the received identification key is stored in the memory 7 of the network recipient 6, the network operator 6 initiates the measures standard for responding to an emergency call.

A significant advantage of the invention is that the cellular phone inquires the identification key from the emergency SIM-card independently of the respectively registered SIM-card, thus not loosing precious time at initiation of an emergency call.

### List of reference numbers

- 1: first SIM-card
- 2: emergency SIM-card
- 3: cellular phone
- 4: head unit
- 5: annular data bus
- 6: network operator
- 7: memory
- 8: radio link

## Claims

1. Method for initiating an emergency call from a vehicle having a mobile communication means (3) being operable to communicate with a communication network via a wireless communication link, said communication means (3) being connected to a removable data carrier (1) carrying information relating to regular use of said communication network and an emergency data storage means storing information (2) relating to emergency use of said communication network, comprising the steps of
- in case of an emergency, retrieving an identification key from said emergency data storage means (2), and
- transmitting said identification key to a recipient (6) within said communication network using a communication link established using information retrieved from said data carrier (1).

2. Method according to claim 1, wherein said identification key is unrelated to said information stored on said data carrier (1).

3. Method according to claim 1 or 2, wherein said communication means (3) is a cellular phone.

4. Method according to any of claims 1-3, wherein said communication network is a cellular phone network.

5. Method according to any of claims 1-4, further comprising a step of verifying whether the identification key received by said recipient (6) matches with an identification key stored in a data base (7) accessible to said recipient (6).

6. Method according to any of claims 1 to 5, wherein the steps of retrieving and transmitting said identification key are performed using a communication link that had been established prior to the occurrence of said emergency, said communication link having been established between said communication means (3) and said communication network using information stored on said data carrier (1).

7. Method according to any of claims 1 to 6, **characterized in that** the identification key is a numerical value stored on said emergency data storage means (2).

8. Method according to any of claims 1 to 7, wherein said identification key is calculated by an algorithm using information retrieved from said emergency data storage means (2) on the basis of a check number received from a provider (6) within said communication network.

9. Method according to any of claims 1 to 8, wherein said recipient (6) and said provider (6) are identical.

10. Emergency call apparatus for initiating an emergency call from a vehicle, comprising
- a mobile communication means (3) being operable to communicate with a communication network via a wireless communication link,
- a removable data carrier (1) for carrying information relating to regular use of said communication network,
- an emergency data storage means (2) for storing information relating to emergency use of said communication network, said removable data carrier (1) and said emergency data storage means (2) being connected to said mobile communication means (3),
- retrieving means for retrieving an identification key from said emergency data storage means (2) in case of an emergency, and
- transmitting means for transmitting said identification key to a recipient (6) within said communication network using a communication link established using information retrieved from said data carrier (1).

11. Emergency call apparatus for initiating an emergency call from a vehicle according to claim 10, wherein said communication means (3) is a cellular phone.

12. Emergency call apparatus for initiating an emergency call from a vehicle according to claim 11, wherein said removable data carrier (1) for carrying information relating to regular use of said communication network and said emergency data storage means (2) for storing information relating to emergency use are SIM-cards of said cellular phone.

13. Emergency call apparatus according to any of claims 10-12, wherein said data carrier (1) and said emergency data storage means (2) are networked via an annular data bus (5).

14. Emergency call apparatus according to claim 13, wherein said annular data bus (5) comprises optical data transmission means.

15. Emergency call apparatus according to any of claims 11-15, wherein said data carrier (1) is located in a headunit (4) and said emergency data storage means (2) is located in said cellular phone.

16. Emergency call apparatus according to according to any of claims 10-15, wherein said emergency data storage means (2) comprises a chip with an algorithm installed thereon for calculating said identification key.

## Patentansprüche

1. Verfahren zum Einleiten eines Notrufs von einem Fahrzeug mit einem mobilen Kommunikationsmittel (3), welches betrieben werden kann, um mit einem Kommunikationsnetzwerk über eine drahtlose Kommunikationsverbindung zu kommunizieren, wobei das Kommunikationsmittel (3) mit einem entfernbaren Datenträger (1) verbunden ist, der Information trägt, die eine herkömmliche Benutzung des Kommunikationsnetzwerks betrifft, und mit einem Notfalldaten-Speichermittel, welches Information (2) speichert, die eine Notfallbenutzung des Kommunikationsnetzwerks betrifft,
umfassend die Schritte
- im Fall eines Notfalls, Erhalten eines Identifikationsschlüssels von dem Notfalldaten-Speichermittel (2), und
- Übertragen des Identifikationsschlüssels zu einem Empfänger (6) innerhalb des Kommunikationsnetzwerks unter Verwendung einer Kommunikationsverbindung, die unter Verwendung von Informationen, die von dem Datenträger (1) erhalten sind, aufgebaut ist.

2. Verfahren nach Anspruch 1, wobei der Identifikationsschlüssel nicht in Bezug zu den Informationen, die auf dem Datenträger (1) gespeichert sind, steht.

3. Verfahren nach Anspruch 1 oder 2, wobei das Kommunikationsmittel (3) ein Mobiltelefon ist.

4. Verfahren nach einem der Ansprüche 1-3, wobei das Kommunikationsnetzwerk ein Mobiltelefonnetzwerk ist.

5. Verfahren nach einem der Ansprüche 1-4, weiterhin umfassend einen Schritt des Verifizierens, ob der von dem Empfänger (6) empfangene Identifikationsschlüssel einem in einer für den Empfänger (6) zugänglichen Datenbank (7) gespeicherten Identifikationsschlüssel gleicht.

6. Verfahren nach einem der Ansprüche 1 bis 5, wobei die Schritte des Erhaltens und Übertragens des Identifikationsschlüssels unter Verwendung einer Kommunikationsverbindung durchgeführt werden, die vor dem Auftreten des Notfalls aufgebaut wurde, wobei die Kommunikationsverbindung zwischen dem Kommunikationsmittel (3) und dem Kommunikationsnetzwerk unter Verwendung von Information, die auf dem Datenträger (1) gespeichert ist, aufgebaut wurde.

7. Verfahren nach einem der Ansprüche 1 bis 6, **dadurch gekennzeichnet, dass** der Identifikationsschlüssel ein numerischer Wert ist, der auf dem Notfalldaten-Speichermittel (2) gespeichert ist.

8. Verfahren nach einem der Ansprüche 1 bis 7, wobei der Identifikationsschlüssel durch einen Algorithmus unter Verwendung von Information, die von dem Notfalldaten-Speichermittel (2) erhalten wird, auf der Basis einer Checknummer, die von einem Provider (6) innerhalb des Kommunikationsnetzwerks empfangen wird, berechnet wird.

9. Verfahren nach einem der Ansprüche 1 bis 8, wobei der Empfänger (6) und der Provider (6) identisch sind.

10. Notrufvorrichtung zum Einleiten eines Notrufs von einem Fahrzeug, umfassend
- ein mobiles Kommunikationsmittel (3), das betrieben werden kann, um mit einem Kommunikationsnetzwerk über eine drahtlose Kommunikationsverbindung zu kommunizieren,
- einen entfernbaren Datenträger (1) zum Tragen von Information, die herkömmliche Benutzung des Kommunikationsnetzwerks betrifft,
- Notfalldaten-Speichermittel (2) zum Speichern von Information, die die Notfallbenutzung des Kommunikationsnetzwerks betrifft, wobei der entfernbare Datenträger (1) und das Notfalldaten-Speichermittel (2) mit dem mobilen Kommunikationsmittel (3) verbunden sind,
- ein Erhaltenmittel zum Erhalten eines Identifikationsschlüssels von dem Notfalldaten-Speichermittel (2) im Falle eines Notfalls, und
- ein Übertragungsmittel zum Übertragen des Identifikationsschlüssels an einen Empfänger (6) innerhalb des Kommunikationsnetzwerks unter Verwendung einer Kommunikationsverbindung, die unter Verwendung von Information, die von dem Datenträger (1) erhalten wurde, aufgebaut wurde.

11. Notrufvorrichtung zum Einleiten eines Notrufs von einem Fahrzeug nach Anspruch 10, wobei das Kommunikationsmittel (3) ein Mobiltelefon ist.

12. Notrufvorrichtung zum Einleiten eines Notrufs von einem Fahrzeug nach Anspruch 11, wobei der entfernbare Datenträger (1) zum Tragen von Information, die die herkömmliche Benutzung des Kommunikationsnetzwerks betrifft, und das Notrufdaten-Speichermittel (2) zum Speichern von Information, die Notfallverwendung betrifft, SIM-Karten des Mobiltelefons sind.

13. Notrufvorrichtung nach einem der Ansprüche 10-12, wobei der Datenträger (1) und das Notrufdaten-Speichermittel (2) mittels eines ringförmigen Datenbussystems (5) vernetzt sind.

14. Notrufvorrichtung nach Anspruch 13, wobei das ringförmige Datenbussystem (5) optische Datenübertragungsmittel umfasst.

15. Notrufvorrichtung nach einem der Ansprüche 11-15, wobei sich der Datenträger (1) in einer Headunit (4) befindet und sich das Notrufdaten-Speichermittel (2) in einem Mobiltelefon befindet.

16. Notrufvorrichtung nach einem der Ansprüche 10-15, wobei das Notrufdaten-Speichermittel (2) zum Berechnen des Identifikationsschlüssels einen Chip mit einem darauf installierten Algorithmus umfasst.

## Revendications

1. Procédé pour initier un appel d'urgence à partir d'un véhicule présentant un moyen de communication mobile (3) apte à communiquer avec un réseau de communication par l'intermédiaire d'un voie de communication sans fil, ledit moyen de communication (3) étant connecté à un support de données amovible (1) portant une information relative à une utilisation régulière dudit réseau de communication, et à un moyen de stockage de données d'urgence (2) stockant une information relative à une utilisation d'urgence dudit réseau de communication,
comprenant les étapes de
- en cas d'urgence, récupérer une clé d'identification dudit moyen de stockage de données d'urgence (2), et
- transmettre ladite clé d'identification à un récepteur (6) au sein dudit réseau de communication en utilisant un voie de communication établie utilisant une information récupérée dudit support de données (1).

2. Procédé selon la revendication 1, dans lequel ladite clé d'identification n'est pas liée à ladite information stockée sur ledit support de données (1).

3. Procédé selon la revendication 1 ou 2, dans lequel ledit moyen de communication (3) est un téléphone cellulaire.

4. Procédé selon l'une quelconque des revendications 1-3, dans lequel ledit réseau de communication est un réseau de téléphonie cellulaire.

5. Procédé selon l'une quelconque des revendications 1-4, comprenant en outre une étape de vérifier si la clé d'identification reçue par ledit récepteur (6) correspond à une clé d'identification stockée dans une base de données (7) accessible pour ledit récepteur (6).

6. Procédé selon l'une quelconque des revendications 1 à 5, dans lequel les étapes de récupérer et de transmettre ladite clé d'identification sont exécutées en utilisant une voie de communication qui a été établie avant l'apparition dudit cas d'urgence, ladite voie de communication ayant été établie entre ledit moyen de communication (3) et ledit réseau de communication en utilisant une information stockée sur ledit support de données (1).

7. Procédé selon l'une quelconque des revendications 1 à 6, **caractérisé en ce que** la clé d'identification est une valeur numérique stockée sur ledit moyen de stockage de données d'urgence (2).

8. Procédé selon l'une quelconque des revendications 1 à 7, dans lequel ladite clé d'identification est calculée par un algorithme utilisant une information récupérée dudit moyen de stockage de données d'urgence (2) à la base d'un numéro de vérification reçu d'un fournisseur d'accès (6) au sein dudit réseau de communication.

9. Procédé selon l'une quelconque des revendications 1 à 8, dans lequel ledit récepteur (6) et ledit fournisseur d'accès (6) sont identiques.

10. Appareil d'appel d'urgence pour initier un appel d'urgence à partir d'un véhicule, comprenant
- un moyen de communication mobile (3) apte à communiquer avec un réseau de communication par l'intermédiaire d'une voie de communication sans fil,
- un support de données amovible (1) pour porter une information relative à une utilisation régulière dudit réseau de communication,
- un moyen de stockage de données d'urgence (2) pour stocker une information relative à une utilisation en cas d'urgence dudit réseau de communication, ledit support de données amovible (1) et ledit moyen de stockage de données d'urgence (2) étant connectés audit moyen de communication mobile (3),
- une moyen de récupération pour récupérer une clé d'identification dudit moyen de stockage de données d'urgence (2) en cas d'une urgence, et
- un moyen de transmission pour transmettre ladite clé d'identification à un récepteur (6) au sein dudit réseau de communication utilisant une voie de communication établie utilisant une information récupérée dudit support de données (1).

11. Appareil d'appel d'urgence pour initier un appel d'urgence à partir d'un véhicule selon la revendication 10, dans lequel ledit moyen de communication (3) est un téléphone cellulaire.

12. Appareil d'appel d'urgence pour initier un appel d'urgence à partir d'un véhicule selon la revendication 11, dans lequel ledit support de données amovible (1) pour porter une information relative à une utilisation régulière dudit réseau de communication et ledit moyen de stockage de données d'urgence (2) pour stocker une information relative à une utilisation en cas d'urgence sont des cartes SIM dudit téléphone cellulaire.

13. Appareil d'appel d'urgence selon l'une quelconque des revendications 10-12, dans lequel ledit support de données (1) et ledit moyen de stockage de données d'urgence (2) sont interconnectés par l'intermédiaire d'un bus de données annulaire (5).

14. Appareil d'appel d'urgence selon la revendication 13, dans lequel ledit bus de données annulaire (5) comprend un moyen de transmission de données optiques.

15. Appareil d'appel d'urgence selon l'une quelconque des revendications 11-14, dans lequel ledit support de données (1) est localisé dans une unité centrale (4) et ledit moyen de stockage de données d'urgence (2) est localisé dans ledit téléphone cellulaire.

16. Appareil d'appel d'urgence selon l'une quelconque des revendications 10-15, dans lequel ledit moyen de stockage de données d'urgence (2) comprend une puce avec un algorithme installé dessus pour calculer ladite clé d'identification.
